(19) Europäisches Patentamt

European Patent Office

Office européen des brevets

(11) EP 0 869 469 A2

## (12) EUROPEAN PATENT APPLICATION

(43) Date of publication:
07.10.1998 Bulletin 1998/41

(51) Int Cl.6: G09G 3/34

(21) Application number: 98302565.1

(22) Date of filing: 01.04.1998

(84) Designated Contracting States:
AT BE CH CY DE DK ES FI FR GB GR IE IT LI LU MC NL PT SE
Designated Extension States:
AL LT LV MK RO SI

(30) Priority: 01.04.1997 US 829952

(71) Applicant: GENESIS MICROCHIP INC.
Markham, Ontario L4R 8G5 (CA)

(72) Inventor: NGO, Calvin
Thornhill, Ontario, L3T 3EI (CA)

(74) Representative: Naismith, Robert Stewart et al
CRUIKSHANK & FAIRWEATHER
19 Royal Exchange Square
Glasgow, G1 3AE Scotland (GB)

### (54) Pixelated display method and apparatus

(57) According to the present invention, an improved method and apparatus are provided whereby variable horizontal and vertical filtering is applied to digital RGB data prior to displaying images on a pixelated display. In addition to horizontal filtering, the vertical filtering provided by the present invention eliminates the smearing artifact which can occur in the absence of vertical filtering. Also, by providing variable rather than fixed filter coefficients, the system of the present invention allows user control of image "softening" to suit personal tastes and ocular needs.

**Figure 3**

## Description

### Field of the Invention

The present invention relates to video processing and in particular to a method and apparatus for displaying video images on a pixelated display device such as a liquid crystal (LCD) panel.

### Background of the Invention

Pixelated displays refer to any display device in which the individual pixels of the display are independently addressable and can be turned "on" or "off". These may include liquid crystal displays (LCDs), or digital micromirror devices (DMDs).

Since adjacent pixels of a pixelated display can be alternately on or off these displays tend to produce a much sharper output than conventional cathode-ray tube displays (CRTs) wherein the images are subject to sampling by a shadow mask and are thus inherently horizontally bandlimited, thereby resulting in a softer appearance. The sharpness in pixelated displays can cause eye fatigue when viewed for extended periods of time. This eye strain may be reduced by filtering the source video prior to display.

U.S. Patent No. 5,287,092 to Shiraishi discloses a panel display apparatus that applies a fixed coefficient low pass filter to horizontal lines of natural images while passing unfiltered character and graphic images. This apparatus produces satisfactory images with the exception that image smearing can occur at the horizontal boundaries of each line. Furthermore, the apparatus of Shiraishi does not address the problem of potential eye fatigue nor does it provide for variable amounts of softening.

Accordingly, there exists a need for an improved pixelated display method and apparatus that can reduce eye fatigue by filtering the source data and which supports varying levels of softening. It is therefore an object of an aspect of the present invention to provide a novel method and apparatus for displaying variably filtered source data on pixelated displays.

### Summary of the Invention

According to the present invention, an improved method and apparatus are provided whereby variable horizontal and vertical filtering is applied to the digital RGB data prior to displaying images on a pixelated display. In addition to horizontal filtering as is known in the prior art, the vertical filtering provided by the present invention eliminates the smearing artifact which can occur in such prior art systems. Also, by providing variable rather than fixed filter coefficients, the system of the present invention allows user control of image "softening" to suit personal tastes and ocular needs.

### Brief Description of the Drawings

A detailed description of the prior art and of the preferred embodiment of the present invention will now be described more fully with reference to the accompanying drawings in which:

Figure 1 is a block diagram showing a conventional pixelated display apparatus;

Figure 2 is a block diagram of a display apparatus according to the present invention;

Figure 3 is a block diagram of an image softening filter according to the present invention;

Figure 4 is a block diagram of a vertical filter component of the softening filter of Figure 3;

Figure 5 is a block diagram of a horizontal filter component of the softening filter of Figure 3; and

Figure 6 is a plot of the frequency responses of various user-selected softening levels for the softening filter according to the present invention.

### Description of the Preferred Embodiment

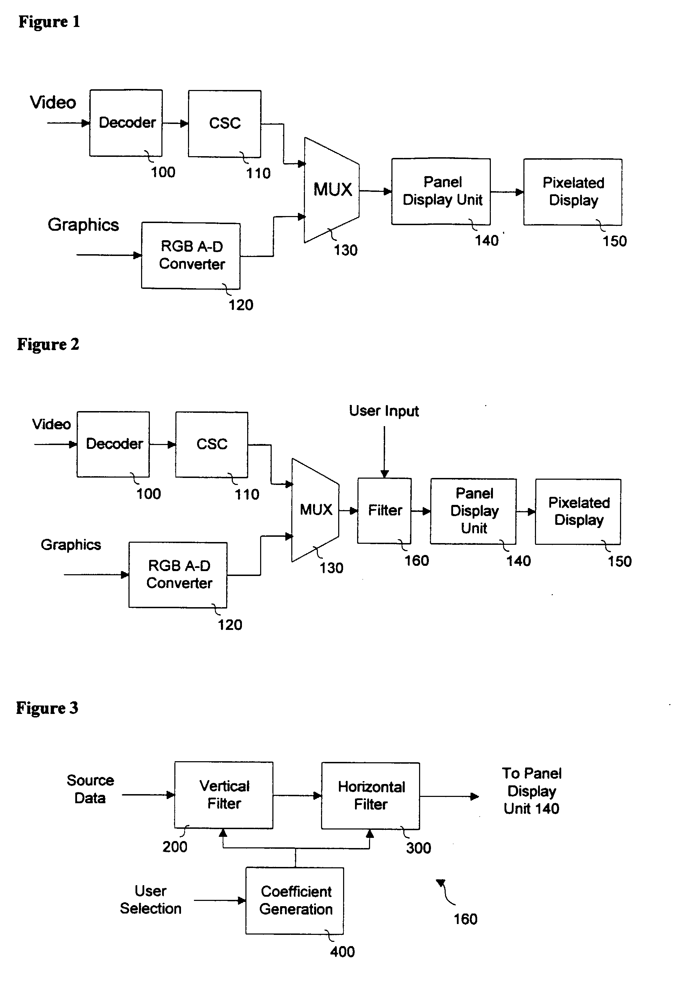

Figure 1 shows a conventional panel display apparatus. When displaying images on a pixelated device, it is necessary to convert the source data into the digital RGB domain. The method involved in this conversion depends upon the format of the source data (i.e. whether it is video or graphics). Input data from a video source is first converted to digital RGB data by a decoder 100 and color space conversion (CSC) circuit 110. For graphics images, the data is converted to RGB format by a RGB A-D converter 120. A multiplexer 130 selects the converted RGB image data from either the video or graphics source and passes this data to a panel display unit 140 which drives the pixelated display 150.

Figure 2 shows an improved pixelated display apparatus according to the present invention wherein a softening filter 160 is inserted just prior to the panel display unit 140 in order to reduce the sharpness of the displayed images and the resulting eye fatigue. In other respects, the panel display apparatus of Figure 2 is identical to the prior art system of Figure 1. As discussed in greater detail below, according to the present invention, the amount of softening provided by the filter 160 is user-selectable to the viewer's preference.

In the preferred embodiment, the filter 160 is a 3-tap vertical and horizontal FIR filter composed of three sub-blocks: a vertical filter 200, a horizontal filter 300, and a coefficient generation block 400, as shown in Figure 3.

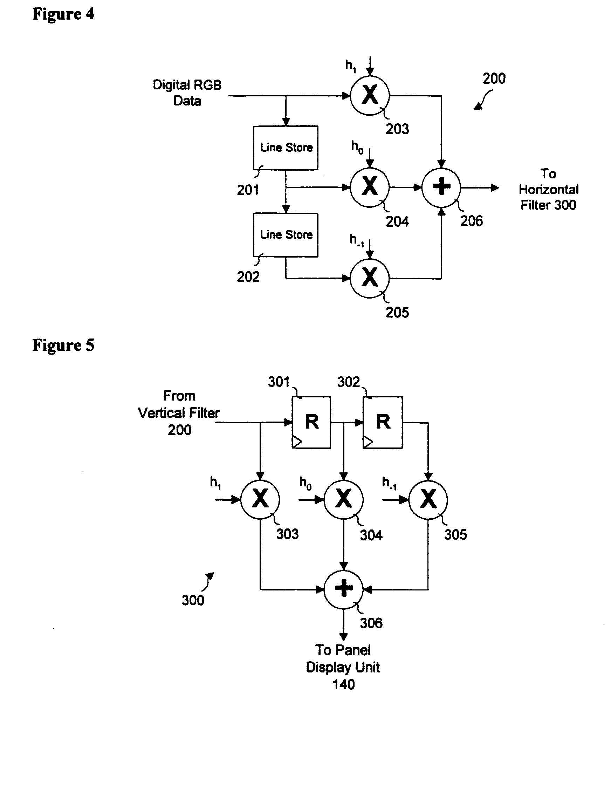

Figure 4 shows the vertical filter 200 in greater detail. Digital RGB data is passed into the vertical filter 200 for temporary buffering in two sequential line stores 201 and 202. The purpose of the line stores is to provide access to three consecutive lines of the source RGB image data. Corresponding pixels from each of the three lines of source image data are passed to multipliers 203, 204 and 205 where they multiplied by coefficients $h_{-1}$, $h_0$ and $h_1$ respectively, wherein $h_{-1}$, $h_0$ and $h_1$ represent the filter coefficients for a 3-tap FIR filter. The outputs of the multipliers are then passed to an adder 206, where they are summed to produce vertically filtered image data. This vertically softened output of the vertical filter is then passed to the horizontal filter 300.

The vertical filter implements the following equation on the source image data:

$$x_{VertOut} = x(n\text{-}1,\ k) * h_{-1} + x(n,\ k) * h_0 + x(n\text{+}1,\ k) * h_1$$

; where n represents the number of the current source line and k represents an arbitrary pixel of a source line.

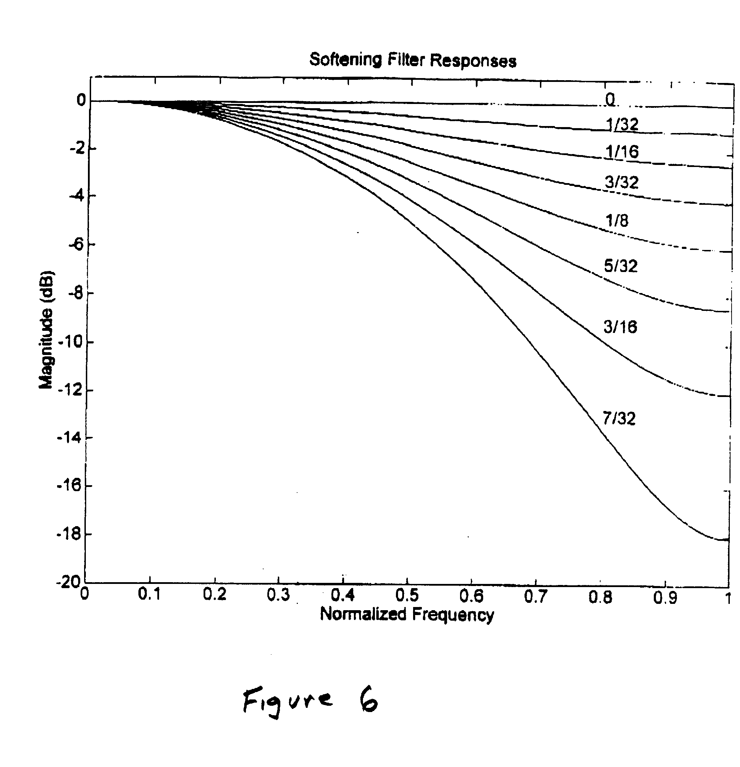

Horizontal filter 300 is shown in Figure 5. Vertically softened data from the vertical filter 200 is passed through two delay elements 301 and 302. The purpose of the delay elements is to provide access to three consecutive pixels of the source image data. The three pixels are then passed to multipliers 303, 304, and 305, where they are multiplied by the coefficients, $h_{-1}$, $h_0$ and $h_1$ respectively. The coefficients $h_{-1}$, $h_0$ and $h_1$ are the same coefficients used as are in the vertical filter 200, thereby ensuring symmetric softening and elimination of prior art smearing artifacts. The multiplier outputs are summed together in adder 306, to produce horizontally and vertically filtered data.

The horizontal filter 300 implements the following equation on the vertically filtered data:

$$x_{HorizOut} = x_{VertOut}(m\text{-}1) * h_{-1} + x_{VertOut}(m) * h_0 + x_{VertOut}(m\text{+}1) * h_1$$

; where m represents the number of the current source pixel.

The horizontal filter output represents the softened data output of the softening filter 160.

As discussed above, the filter coefficients used in the horizontal and vertical filters are preferably user-selectable. According to another aspect of the invention, in order eliminate the need for memory to store the filter coefficients, all three coefficients are generated in the coeffcient generation block 400 from a single user-selected value as follows:

$$h_{-1} = h_1 = \text{User selected value.}$$

$$h_0 = 1 - h_{-1} - h_1$$

Thus, if the user selects $h_{-1} = h_1 = 0$, then $h_0 = 1$. This represents non-filtered image data with no softening. In this case, the coefficients are such that the source data is passed through filter 160 unchanged.

The following table demonstrates the filter coefficients for various user-selected levels of softening:

| User Select | $h_{-1}$ | $h_0$ | $h_1$ |
|:---:|:---:|:---:|:---:|
| 0 | 0 | 1 | 0 |
| 1/32 | 1/32 | 15/16 | 1/32 |
| 1/16 | 1/16 | 7/8 | 1/16 |

(continued)

| User Select | $h_{-1}$ | $h_0$ | $h_1$ |
|---|---|---|---|
| 3/32 | 3/32 | 13/16 | 3/32 |
| 1/8 | 1/8 | 3/4 | 1/8 |
| 5/32 | 5/32 | 11/16 | 5/32 |
| 3/16 | 3/16 | 5/8 | 3/16 |
| 7/32 | 7/32 | 9/16 | 7/32 |

The frequency responses corresponding to these low-pass filter coefficients are shown in Figure 6.

A person understanding the principles of the present invention may conceive of other embodiments or variations thereof, all of which are believed to fall within the ambit of the claims appended hereto.

**Claims**

1. In a system for displaying images on a pixelated display, the improvement comprising a softening filter for providing horizontal and vertical filtering of said images to a predetermined level of image softness prior to display via said pixelated display.

2. The improvement of claim 1, further comprising user selectable means for varying said predetennined level of image softness.

3. The improvement of claim 2, wherein said softening filter comprises a vertical filter for filtering successive lines of said images and a horizontal filter for filtering successive pixels of said successive lines of said images.

4. The improvement of claim 3, wherein each of said horizontal filter and said vertical filter are low pass FIR filters characterized by a plurality of filter coefficients for effecting said filtering.

5. The improvement of claim 4, wherein each of said low pass FIR filters are 3-tap filters having coefficients $h_0$, $h_{-1}$ and $h_1$.

6. The improvement of claim 5, wherein said user selectable means for varying said predetermined level of image softness comprises means for receiving a user selected value, assigning said user selected value to said coefficients $h_{-1}$ and $h_1$ and generating said coefficient $h_0 = 1 - h_{-1} - h_1$.

7. The improvement of claim 6, wherein said vertical filter further comprises:

   a) a first line store for receiving and storing a first line of said images;

   b) a second line store for receiving and storing a second line of said images;

   c) a first multiplier for multiplying successive pixels of a third line of said images by said coefficient $h_{-1}$ and in response generating a first plurality of product values;

   d) a second multiplier for multiplying successive pixels of said second line of said images by said coefficient $h_0$ and in response generating a second plurality of product values;

   e) a third multiplier for multiplying successive pixels of said first line of said images by said coefficient $h_1$ and in response generating a third plurality of product values; and

   f) an adder for summing said first, second and third pluralities of product values and in response generating vertically softened lines of said images.

8. The improvement of claim 7, wherein said horizontal filter further comprises:

   a) a first delay element for receiving and storing a first pixel of each of said vertically softened lines of said images;

b) a second delay element for receiving and storing a second pixel of each of said vertically softened lines of said images;

c) a first additional multiplier for multiplying a third pixel of each of said vertically softened lines of said images by said coefficient $h_{-1}$ and in response generating a first additional plurality of product values;

d) a second additional multiplier for multiplying said second pixel of each of said vertically softened lines of said images by said coefficient $h_0$ and in response generating a second additional plurality of product values;

e) a third additional multiplier for multiplying said first pixel of each of said vertically softened lines of said images by said coefficient $h_1$ and in response generating a third additional plurality of product values; and

f) an additional adder for summing said first, second and third additional pluralities of product values and in response generating horizontally and vertically softened ones of said images.

9. Apparatus for driving a pixelated display, comprising:

i) decoding means for receiving and converting analog video signals to digital video signals;

ii) color space conversion means for converting luminance/chrominance data in said digital video signals to RGB video data signals;

iii) RGB capture means for receiving and converting analog graphics signals to RGB graphics data signals;

iv) multiplexer means for receiving and multiplexing said RGB data signals output from said color space conversion means and said RGB capture means;

v) filter means for receiving said RGB data signals output from said multiplexer and applying variable levels of softening thereto; and

vi) panel display means for driving said pixelated display.

10. The apparatus of claim 9 for wherein said filter means provides both horizontal and vertical filtering of said RGB data signals to a predetennined level of image softness prior to display via said pixelated display.

11. The apparatus of claim 10, further comprising user selectable means for varying said predetermined level of image softness.

12. The apparatus of claim 11, wherein said filter means comprises a vertical filter for filtering successive lines of said RGB data signals and a horizontal filter for filtering successive pixels of said successive lines of said RGB data signals.

13. The apparatus of claim 12, wherein each of said horizontal filter and said vertical filter are low pass FIR filters characterized by a plurality of filter coefficients for effecting said filtering.

14. The apparatus of claim 13, wherein each of said low pass FIR filters are 3-tap filters having coefficients $h_0$, $h_{-1}$ and $h_1$.

15. The apparatus of claim 14, wherein said user selectable means for varying said predetermined level of image softness comprises means for receiving a user selected value, assigning said user selected value to said coefficients $h_{-1}$ and $h_1$ and generating said coefficient $h_0 = 1 - h_{-1} - h_1$.

16. The apparatus of claim 15, wherein said vertical filter further comprises:

a) a first line store for receiving and storing a first line of said RGB data signals;

b) a second line store for receiving and storing a second line of said RGB data signals;

c) a first multiplier for multiplying successive pixels of a third line of said RGB data signals said coefficient $h_{-1}$ and in response generating a first plurality of product values;

d) a second multiplier for multiplying successive pixels of said second line of said RGB data signals by said coefficient $h_0$ and in response generating a second plurality of product values;

e) a third multiplier for multiplying successive pixels of said first line of said RGB data signals by said coefficient $h_1$ and in response generating a third plurality of product values; and

f) an adder for summing said first, second and third pluralities of product values and in response generating vertically softened lines of said RGB data signals.

**17.** The apparatus of claim 16, wherein said horizontal filter further comprises:

a) a first delay element for receiving and storing a first pixel of each of said vertically softened lines of said RGB data signals;

b) a second delay element for receiving and storing a second pixel of each of said vertically softened lines of said RGB data signals;

c) a first additional multiplier for multiplying a third pixel of each of said vertically softened lines of said RGB data signals by said coefficient $h_{-1}$ and in response generating a first additional plurality of product values;

d) a second additional multiplier for multiplying said second pixel of each of said vertically softened lines of said RGB data signals by said coefficient $h_0$ and in response generating a second additional plurality of product values;

e) a third additional multiplier for multiplying said first pixel of each of said vertically softened lines of said RGB data signals by said coefficient $h_1$ and in response generating a third additional plurality of product values; and

f) an additional adder for summing said first, second and third additional pluralities of product values and in response generating horizontally and vertically softened ones of said RGB data signals.

**18.** A method of softening images for display on a pixelated display, comprising the steps of:

receiving a user selected predetermined level of image softness and in response generating a plurality of filter coefficients

vertically filtering successive lines of said images utilizing said plurality of filter coefficients so as to generate vertically softened images;

horizontally filtering successive pixels of said successive lines of said vertically softened images utilizing said plurality of filter coefficients so as to generate vertically and horizontally softened images; and

applying said vertically and horizontally softened images to said pixelated display.

**Figure 1**

**Figure 2**

**Figure 3**

**Figure 4**

Digital RGB Data → (through Line Store 201, Line Store 202)

$h_1$ → X 203
$h_0$ → X 204
$h_{-1}$ → X 205

+ 206 → To Horizontal Filter 300

200

**Figure 5**

From Vertical Filter 200 → R 301 → R 302

$h_1$ → X 303
$h_0$ → X 304
$h_{-1}$ → X 305

+ 306 → To Panel Display Unit 140

300

Figure 6